# EUROPEAN PATENT APPLICATION

(11) **EP 1 871 074 A1**
(43) Date of publication of application: **26.12.2007**
(21) Application number: 07015938.9
(22) Date of filing: 07.06.2002
(51) Int. Cl.: H04L 29/08, H04Q 7/24

(54) **Method for sending connection-oriented of connectionless data**

(62) Divisional of application: 02738195.3
(71) Applicant: Nokia Corporation, 00045 Espoo (FI)
(72) Inventor: Ramos-Escano, Gabriel, 29016 Màlaga (ES); Longoni, Fabio, 29017 Malaga (ES); Sanchez, Raquel, 29010 Malaga (ES); Kekki, Sami, 00260 Helsinki (FI); Arias-Rodrigues, Ivan, 00100 Helsinki (FI); Vesterinen, Seppo, FI-90460 Oulunsalo (FI); Marin, Janne, FI-02210 Espoo (FI); Tervonen, Janne, FI-02600 Espoo (FI)
(74) Representative: Simmelvuo, Markku Kalevi

(57) **Abstract**

The present invention describes a method, system and an interconnecting handler for sending connection-oriented or connectionless data between two endpoints in a protocol architecture, The transport protocol in the protocol architecture is in a preferred embodiment the Stream Control Transmission Protocol (SCTP). The present invention allows the setup and release of a connection when using a simplified protocol stack which is able to provide the same kind of services without using peer-to-peer messages like SCCP or SUA use. The present invention also enables discrimination between connection-oriented and connectionless services without peer-to-peer signalling.

## Description

### FIELD OF THE INVENTION

The present invention relates to mobile telecommunication systems. In particular, the present invention relates to a novel and improved method and system for sending connection-oriented or connectionless data between two endpoints without using peer-to-peer signalling.

### BACKGROUND OF THE INVENTION

The transmission of information in communication networks is based on the use of different kinds of protocol architectures. Generally it can be said that the more protocol layers exist in a protocol architecture, the more complex the architecture is. In general, practically every protocol architecture comprises application and transport layers. The application layer provides services for application programs that ensure that communication is possible. The application layer is not the application itself that is doing the communication. It is a service layer that may make sure that the other party is identified and can be reached or may authenticate either the message sender or receiver or both. Furthermore, the application layer may also ensure agreement at both ends about error recovery procedures, data integrity and privacy, and may determine protocol and data syntax rules at the application level. It may be convenient to think of the application layer as the high-level set up services for the application program or an interactive user.

The transport layer ensures the reliable arrival of messages and may provide error checking mechanisms and data flow controls. The transport layer provides services for both connection-oriented transmission and for connectionless transmission. For connection-oriented transmission, a transmission may be sent or arrive in the form of packets that need to be reconstructed into a complete message at the other end.

There are a number of different standards known which govern the communication between mobile stations and the base stations as well as with other network elements. One example of a currently known standard is the Global System for Mobile communications (GSM) standard. Currently, work is being carried out on so-called third generation standards. These third generation standards are generated by so called 3rd Generation Partnership Project (3GPP) and they are defining so called 3GPP system comprising UMTS Terrestrial Radio Access Network (UTRAN), GSM/EDGE Radio Access Network (GERAN), packet and circuit switched core network domains etc.

Currently it is proposed in the third generation standards to use the Internet Protocol (IP) in the radio access network (RAN). In this document, we refer to this as an IP based radio access network IP RAN. The IP RAN can be connected to a third generation core network by standard Iu interface. In the IP RAN networks, there is a need for interworking between the Signalling System no. 7 (SS7) and IP domains to allow the delivery of Signalling Connection Control Part (SCCP) user messages such as Radio Access Network Application Part (RANAP) signalling as well as new third generation network protocol messages over IP between two signalling endpoints. RANAP is a radio access network signalling protocol that consists of mechanisms which handle procedures between the core network and radio access network.

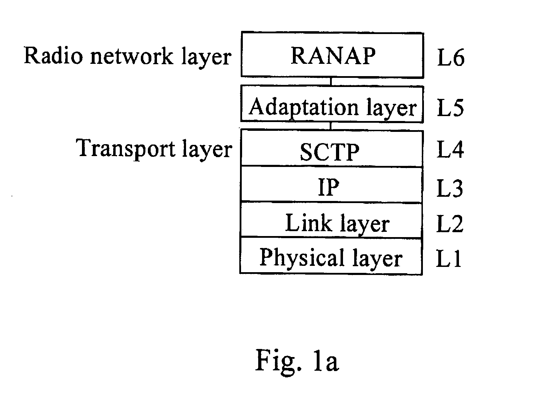

A layer structure has been proposed. This layer structure uses the Stream Control Transmission Protocol (SCTP), which is a protocol standardized by the Internet Engineering Task Force (IETF) and specified in RFC 2960. The SCTP provides reliable transport service, ensuring that data is transported across the network without error and in sequence. The SCTP protocol runs directly on top of the IP layer and is designed to transport Public Switched Telephone Network (PSTN) signalling messages but is capable of broader applications and can be used in the IP RAN networks as a common protocol. Adaptation layers between the SCTP layer and RANAP layer have been proposed, as illustrated in Figure 1a. The current Third Generation Partnership project (3GPP) suggests the usage of the SCCP under the RANAP and the introduction of the SCCP MTP3 User Adaptation layer (M3UA) protocol as an adaptation layer. As an alternative, the SS7 SCCP-User Adaptation layer (SUA) protocol can be used as adaptation layer between the RANAP and SCTP. Those adaptation layers are applicable for the RANAP and for any other third generation application part messages between two endpoints contained wholly within an IP network.

One problem with the proposed layer structure is that there are too many layers. As the number of layers increases, the complexity increases and the performance is decreased.

In All IP RAN there is a need to optimise the current control plane protocol stack (also referred to as signalling bearer) since the SS7 protocol stack (SCCP based) is relatively heavy to configure. In current 3GPP specifications (up to release '5) and implementations, the signalling bearer, upon request from one end, set up and release signalling connection with the other end with peer-to-peer signalling messages. The used protocol for this is SCCP, but also another candidate discussed in the 3GPP, the SUA, provides similar peer-to-peer messages for the set up of the signalling connection.

An alternative to the usage of peer-to-peer signalling transport protocols (adaptation layer L5; as the SUA or SCCP/M3UA) below the application to establish and release the connections is the usage of adaptation layers that provides the same services without any peer-to-peer message. For example, when adaptation layer protocols like the SUA or SCCP/M3UA receive from the application a disconnect request, they send a disconnection protocol data unit (PDU) to the remote endpoint. There is a peer-to-peer communication. With this alternative, no peer-to-peer messages are needed to provide the disconnection.

Therefore, one problem with this new alternative is how to set up and release a signalling connection: the connection set up and release by sending PDUs are not possible. Another problem arises when there are no signalling transport peer-to-peer protocols as the SUA or SCCP/M3UA below the application. The problem is how to differentiate connectionless and connection-oriented services.

### SUMMARY OF THE INVENTION

The present invention describes a method according to claim 1, an interconnecting handler program according to claim 22 and a system according to claim 35 for sending connection-oriented or connectionless data between two endpoints in a protocol architecture comprising at least an application layer and a transport layer and one or more applications using the application layer.

In the method, a source application sends a request message at the first endpoint to the transport layer. The request message also indicates which service (connection oriented or connectionless) should be provided by the transport layer. At the transport layer a transport connection identifier is selected and/or allocated. Then a data frame is sent to the second endpoint, the data frame comprising the selected transport connection identifier, destination application information and/or data type information. The destination application information and the data type information are concluded based on the request message. The data frame is received at the transport layer at the second endpoint. Based on the data type indication it is determined whether the data frame relates to connection-oriented or connectionless service. Finally, an application message is sent to the destination application at the second endpoint based on the destination application information.

In a preferred embodiment, the application layer and transport layer are directly connected with each other and the transport protocol at the transport layer is the SCTP. In this case, the connection identifier refers to the SCTP streamID. Furthermore, in a preferred embodiment the application layer and transport layer are connected with each other through an interconnecting handler. Also the term SCTP handler is used when talking about the interconnecting handler. The SCTP Handler is an adaptation layer or driver between the application layer and the SCTP layer which provides SCCP-like services to the application. An important fact is that the SCTP Handler is not a peer-to-peer protocol. Its use simplifies the protocol stack and two overlapping addressing/routing mechanisms are avoided.

In one embodiment of the present invention, the value of the Protocol Payload Identifier (PPI) parameter identifies the destination application and the type of the data (connection-oriented or connectionless).

In one embodiment of the present invention, the value of the Protocol Payload Identifier (PPI) parameter identifies the destination application and the steam number used the type of the data (connection-oriented or connectionless).

In one embodiment of the present invention, the value of the Protocol Payload Identifier parameter identifies the destination application and the SCTP unordered flag the type of the data (connection-oriented or connectionless).

In one embodiment of the present invention, the value of the Protocol Payload Identifier parameter identifies the destination application and the steam number used the type of the data (connection-oriented or connectionless). The unordered flag is set to '1' for connectionless services.

Because there is not peer-to-peer signalling communication the transport set up/release by sending PDUs is not possible. Therefore, the interconnecting handler provides a local establishment / disconnection of signalling connections. It must be noted that the present invention can be extended to any case where the signalling transport does not provide a peer-to-peer message to perform the set up/disconnection of resources. Even if illustrated together with the SCTP and SCTP Handler, the present invention is applicable for any other signalling bearer protocol that does not have peer-to-peer connection set up and release messages.

The present invention is able to provide the same kind of services than a signalling protocol like SCCP/M3UA or SUA to the application, i.e. connection-oriented and connectionless services but without using peer-to-peer messages. The simplified protocol stack has also clear benefits. The overhead introduced by the SCCP/M3UA, SUA or any peer-to-peer adaptation protocol used is avoided. Furthermore, overlapping addressing/routing mechanisms are also avoided.

The present invention allows the set up and release of connections when using a simplified protocol stack. The advantage of this kind of protocol architecture is that it reduces the complexity (implementation and operational) and also the processing requirement of the signalling bearer. Another advantage is that the present invention reduces the delay for the set up and release of the connections. Especially the set up delay has direct impact on the experienced end user quality of service.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig 1a** is a block diagram illustrating a known protocol stack,
**Figs 1b and 1c** illustrate the local transport connection set up procedure at the source and destination endpoints, in accordance with the present invention,
**Figs 2a and 2b** illustrate the local transport connection release procedure at the source and destination endpoints, in accordance with the present invention,
**Fig 3a** is a block diagram illustrating a preferred protocol stack, in accordance with the present invention,
**Fig 3b** is a block diagram illustrating an interconnecting handler, in accordance with the present invention,
**Fig 4a** is a flowchart illustrating the mechanism which is based on the use of the PPI parameter to distinguish connection-oriented and connectionless services by the source endpoint, in accordance with the present invention,
**Fig 4b** is a flowchart illustrating the mechanism which is based on the use of the PPI parameter to distinguish connection-oriented and connectionless services by the destination endpoint, in accordance with the present invention,
**Fig 5a** is a flowchart illustrating the mechanism which is based on the reservation of streams to distinguish connection-oriented and connectionless services by the source endpoint, in accordance with the present invention,
**Fig 5b** is a flowchart illustrating the mechanism which is based on the reservation of streams to distinguish connection-oriented and connectionless services by the destination endpoint, in accordance with the present invention,
**Fig 6a** is a flowchart illustrating the mechanism which is based on use of the SCTP unordered-flag parameter to distinguish connection-oriented and connectionless services by the source endpoint, in accordance with the present invention, and
**Fig 6b** is a flowchart illustrating the mechanism which is based on use of the SCTP unordered-flag parameter to distinguish connection-oriented and connectionless services by the destination endpoint, in accordance with the present invention,
**Fig 7** shows one embodiment of the system wherein the present invention can be used, and
**Fig 8** shows an arrangement including an IP RAN logical architecture used in embodiments of the present invention.

### DETAILED DESCRIPTION OF THE INVENTION

Reference will now be made in detail to the embodiments of the present invention, examples of which are illustrated in the accompanying drawings.

Figure 1a shows a known control plane protocol stack for Iu interface currently proposed in the 3GPP standardization. This is disclosed in the third generation partnership project 3GPP, Technical specification group TSG; IP transport in UTRAN work task technical report TR25.933 (version 5.0.0). The protocol stack has six layers. The first layer is the physical layer L1. On top of the physical layer L1 is the link layer L2. On top of that is the IP layer L3.

On top of the IP layer is the SCTP layer, L4. As mentioned previously, this is based on the IETF protocol specified in RFC2960. This layer is used e.g. to transport PSTN signalling messages but can also be used for a common protocol for IP RAN control plane interfaces. The SCTP is a transport protocol operating on top of a connectionless packet network such as IP. It allows the sequence delivery of user messages within multiple streams with the option of order of arrival delivery of individual user messages. The SCTP is connection oriented in nature. The SCTP provides the means for each SCTP endpoint to provide the other endpoint during association start up with a list of transport addresses such as multiple IP addresses in combination with an SCTP port, through which that endpoint can be reached and from which it will originate SCTP packets. The association spans transfers over all of the possible source/destination combinations which may be generated from each endpoint.

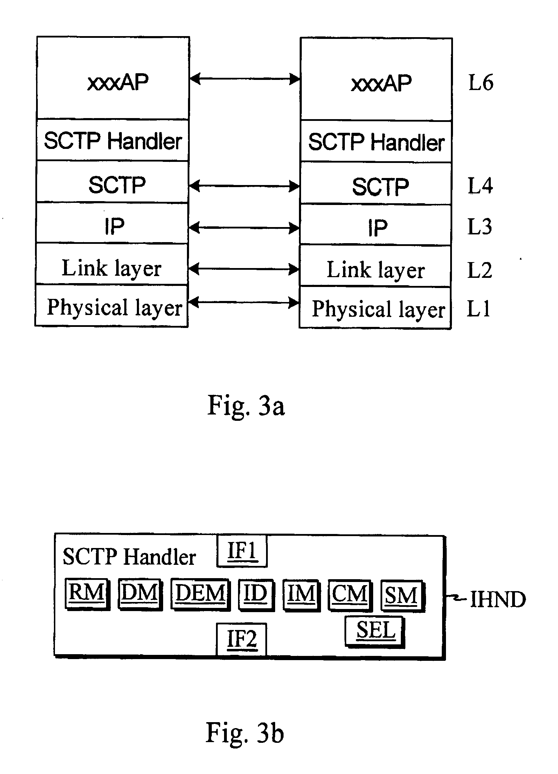

On top of the SCTP layer is an adaptation layer L5. The adaptation layer is as already mentioned the SCCP user adaptation layer (SUA) or similar. In Figure 1a, the radio network layer RANAP represents the layer L6. Similar kind of protocol stacks can be used in other interfaces also by changing the Layer above transport layer (XXXAP). In Iur interface the radio network layer is a RNSAP (Radio Network Subsystem Application Part) layer. The RNSAP is a radio network subsystem signalling protocol for the Iur interface. The control plane protocol stack shown in Figure 3a is used in the Iu interface originally designed in 3GPP to be used between the Radio Network Controller (RNC) and the Core Network (CN).

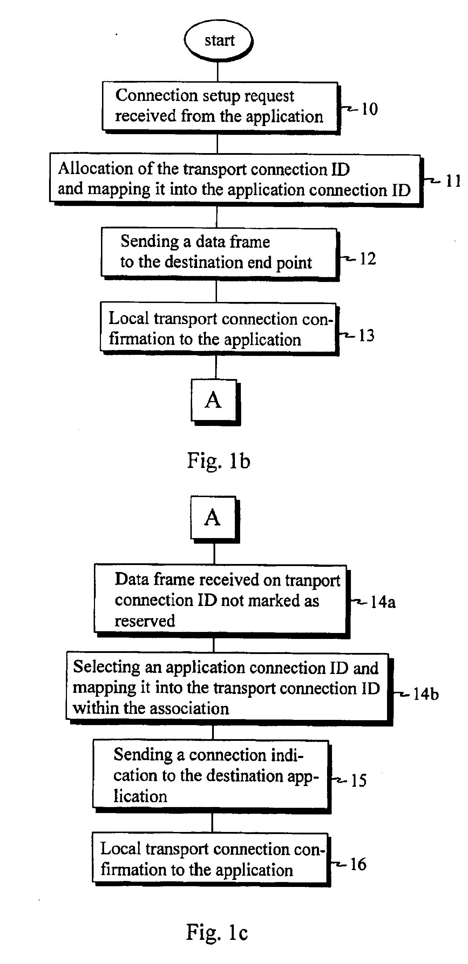

Figures 1b and 1c illustrate the local signalling transport connection set up procedure at the source and destination endpoints. An application at the source endpoint sends a request (10) to the lower layer to set up a signalling connection. The request shall comprise the application connection identifier. The request also indicates which service (connection-oriented or connectionless) should be provided by the transport layer. The request may comprise also application data to be sent to a destination application. An unused transport connection identifier is allocated (11) at the transport layer for the connection and it is mapped with the application connection identifier for further routing purposes during length of the connection. After that, a data frame may be sent (12) to the destination endpoint with the allocated transport connection identifier. When the transport protocol used is the SCTP, the transport connection identifier refers e.g. to the SCTP streamID. The transport connection identifier is typically in the header of the data frame. If no application data was present in the request for connection, void data value is sent (if allowed by the signalling protocol). A set up confirmation primitive may be sent to the application at the source endpoint. The local set up of the signalling connection at the source endpoint is now completed (13).

At the destination endpoint, the data frame is received (14a) on a transport connection identifier (e.g. the SCTP streamID) not marked as reserved. Therefore it is interpreted that the data frame is a request for a new signalling connection. An application connection identifier is selected for this specific connection and it is mapped with the transport connection identifier (e.g. the SCTP streamID) for further routing purposes during length of the connection (14b). A connection indication message is therefore sent (15) to the destination application at the destination endpoint. The application at the destination endpoint may send a connection response to the lower layer (transport layer). The local set up of the signalling connection at the destination endpoint is now completed (16).

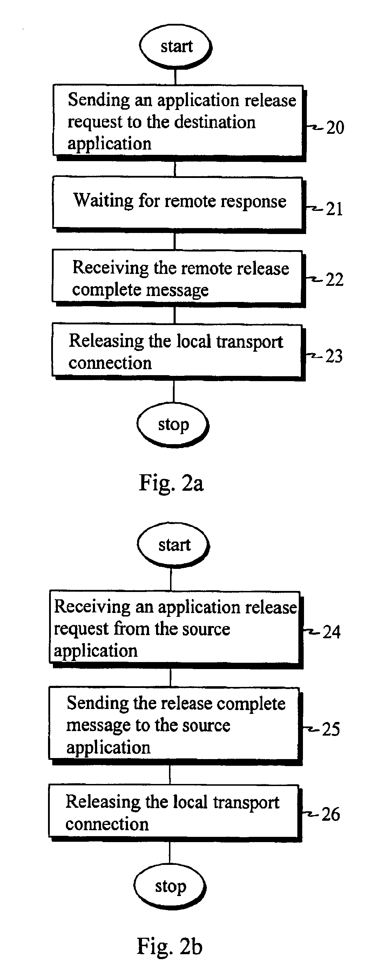

Figures 2a and 2b illustrate the local transport connection release procedure at the source and destination endpoints.

An application at the source endpoint sends an application release request message (20) and waits for remote response (21). The application release request message is transferred to the transport layer using a data primitive. Then, the message is received by the application at the destination endpoint (24). The application at the destination endpoint then sends (25) the application release complete message to the source application. The application at the destination endpoint sends a Disconnection Request primitive to the transport layer to release locally used resources (26). When an application at the source endpoint receives (22) the application release complete message as response to the previous application release request message, it shall trigger the local release of the resources at transport level at the source endpoint. Therefore, the application will send a Disconnection Request primitive to the transport layer which will be interpreted by the transport layer as a local disconnection. After receiving the Disconnect Request primitive, all the transport resources are released (23). It must be noted that the local release of the transport resources is triggered by the application in each endpoint when receiving the release application message. No peer-to-peer transport disconnection messages (e.g. SCTP PDUs) are needed for the disconnection.

Figure 3a shows the control plane protocol stack in preferred embodiments of the present invention. The protocol stack has layers L1 - L4 and L6 as does the control stack of Figure 1a. However, there is no adaptation layer L5. Instead, the protocol stack comprises the SCTP handler between the application layer L6 and the SCTP at layer L4. The SCTP Handler is an adaptation layer or driver between the application and the SCTP layer which provides SCCP-like services to the application. However, it is important to realise that the SCTP Handler is not a peer-to-peer protocol (like e.g. the SUA of M3UA).

Fig 3b is a block diagram illustrating an interconnecting handler IHND. The interconnecting handler IHND refers in preferred embodiment to the SCTP Handler. The SCTP Handler comprises means for receiving IF1 a source application request message from an application, means for selecting and/or allocating ID connection identifiers (transport and application connection identifiers), means for including IM the selected or allocated transport connection identifier, destination application information, data type information and/or payload in a data frame to be sent to the second endpoint at the transport layer, means for reading RM a transport connection identifier, destination application information and/or data type information from a received data frame, means for determining DM whether a received data-frame relates to connection-oriented or connectionless service based on the data type indication, means for detecting DEM if a received data frame corresponds to a new or an already existing signalling connection, means for selecting (SEL) an application connection identifier if the received data frame corresponds to a new signalling connection and means for sending IF2 an application message to the destination application at the application layer based on the destination application information.

The interconnecting handler connects an application layer and transport layer with each other. The interconnecting handler further comprises means for creating CM an SCTP association between endpoints and means for storing SM the relation between the selected SCTP streamID and the application connection identifier within an application. Means for selecting ID are also provided for selecting an SCTP streamID within the SCTP association based on the fact whether the service in question is connection-oriented or connectionless. Means for reading RM are also provided for checking the stored SCTP streamIDs.

In one embodiment, means for selecting ID are also provided for selecting a suitable value for the Protocol Payload Identifier parameter, the Protocol Payload Identifier parameter identifying the destination application and/or connectionless or connection-oriented service.

In one embodiment, means for selecting ID are also provided for setting or unsetting the SCTP unordered flag parameter, the unsetting of the SCTP unordered flag parameter indicating connection-oriented service and setting connectionless service.

In one embodiment, means for determining DM are also provided for determining whether the data frame relates to connection-oriented or connectionless service based on the Protocol Payload Identifier parameter value.

In one embodiment, means for determining DM are also provided for determining the destination application based on the Protocol Payload Identifier parameter value.

In one embodiment, means for determining DM are also provided for determining whether the data frame relates to connection-oriented or connectionless service based on the SCTP streamID.

In one embodiment, means for detecting DEM are also provided for determining whether the SCTP streamID relates to a new signalling connection request or to an existing connection.

In one embodiment, means for determining DM are also provided for determining based on the SCTP unordered flag whether the data frame relates to connection-oriented or connectionless service.

The above mentioned means are in a preferred embodiment implemented with hardware and/or software components.

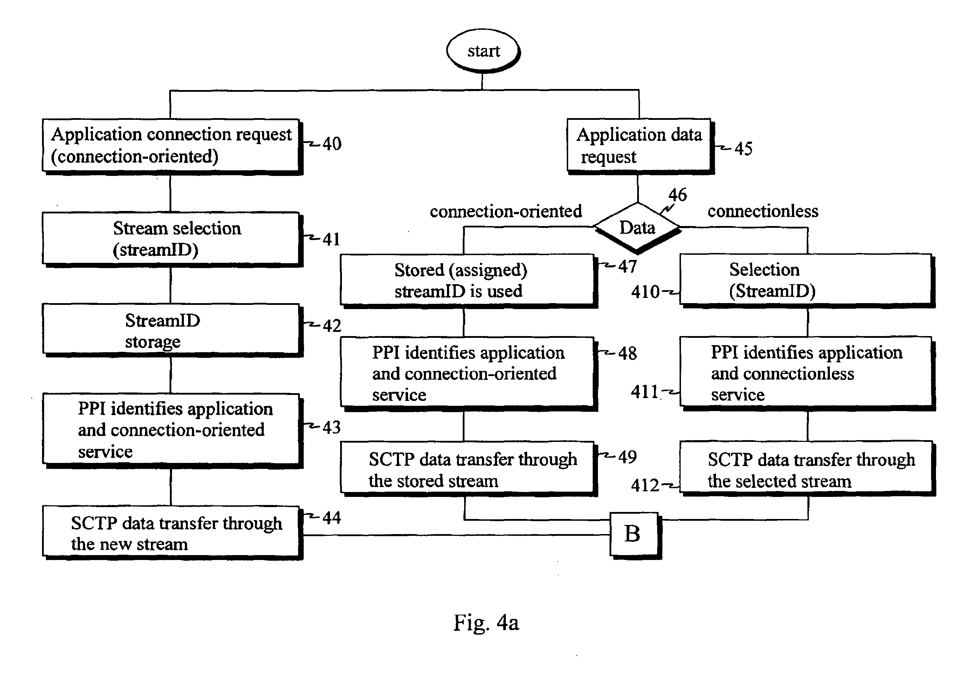

Figure 4a is a flowchart illustrating the mechanism which is based on the use of the PPI parameter to distinguish connection-oriented and connectionless services between endpoints.

In case of connection-oriented service a signalling connection shall be established before starting the actual data transfer. In the following, the signalling connection establishment is first explained. An application requests a signalling connection establishment by sending a request to the SCTP Handler (40). The request specifically indicates that connection-oriented service should be provided by the transport layer. The SCTP Handler creates an SCTP association between the source and the destination endpoint if it has not been created before. An SCTP association is a protocol relationship between SCTP endpoints, composed of the two SCTP endpoints and protocol state information. An association can be uniquely identified by the transport addresses used by the endpoints in the association. Two SCTP endpoints must not have more than one SCTP association between them at any given time. After creating the association, the SCTP Handler selects a stream within the SCTP association (41). The selected stream cannot be one that is already used with another connection. The stream is identified by a unique stream number (streamID). The SCTP Handler does the mapping of the streamID within the association and the application connection identifier within the application and stores the mapping information (42). The mapping procedure simulates the local establishment of the signalling connection at the source endpoint side. The mapping is necessary for routing purposes during the length of the connection. Stored information is not released until the signalling connection is released.

If a signalling connection has not been set up, the source application shall select a value for the application connection identifier (connID), each time that a new connection is requested from this application endpoint. In case of incoming request to the destination application, the SCTP Handler shall select a connID (application connection identifier) value for each new incoming connection establishment request. The SCTP Handler processes a new incoming connection when the received streamID in the data transfer is not included in the allocated streams list in the SCTP Handler (i.e., the received streamID is not being used for another signalling connection). The connID parameter is used only in connection-oriented services. The streamID identifies one stream within one association. In one embodiment, streams are unidirectional, so one identifier is assigned for each direction of the association.

The SCTP Handler at the source endpoint selects a suitable value for the Payload Protocol Identifier (PPI) parameter (43). In this embodiment of the invention, the PPI value identifies the destination application and differentiates the connection-oriented service from the connectionless services. Finally, the SCTP transfers an SCTP PDU to the remote SCTP (44). If application data were present in the application request, the data may be transferred as payload within the SCTP PDU.

If the signalling connection for a connection-oriented service has already been set up or the service is connectionless, the functionality is slightly different than when just establishing the signalling connection. When the SCTP Handler at the source endpoint receives application data, the data can be either connection-oriented or connectionless (45). If the SCTP Handler receives connection-oriented data (46) from an upper application that has already established a signalling connection, the SCTP Handler will use the previously assigned stream for that signalling connection within the association (47). The SCTP Handler selects the suitable value for the PPI. In this case the PPI identifies both the application protocol and the connection-oriented service (48). Finally, the source SCTP transfers the SCTP PDU to the destination SCTP (49). The application data is transferred as payload within the SCTP PDU.

If the SCTP Handler receives connectionless data (46) from the upper application, the SCTP Handler selects one of the unused SCTP streams within the association (410). An unused SCTP stream refers e.g. to a stream that is not spefically used or allocated for connection-oriented services. If an association between the source and destination endpoints has not been created before, it will be created. Next, the SCTP Handler selects the suitable value for the PPI (411). In this case the PPI identifies both the application protocol and the connectionless service. Finally, the source SCTP transfers the SCTP PDU to the destination SCTP (412). The application data is transferred as payload within the SCTP PDU.

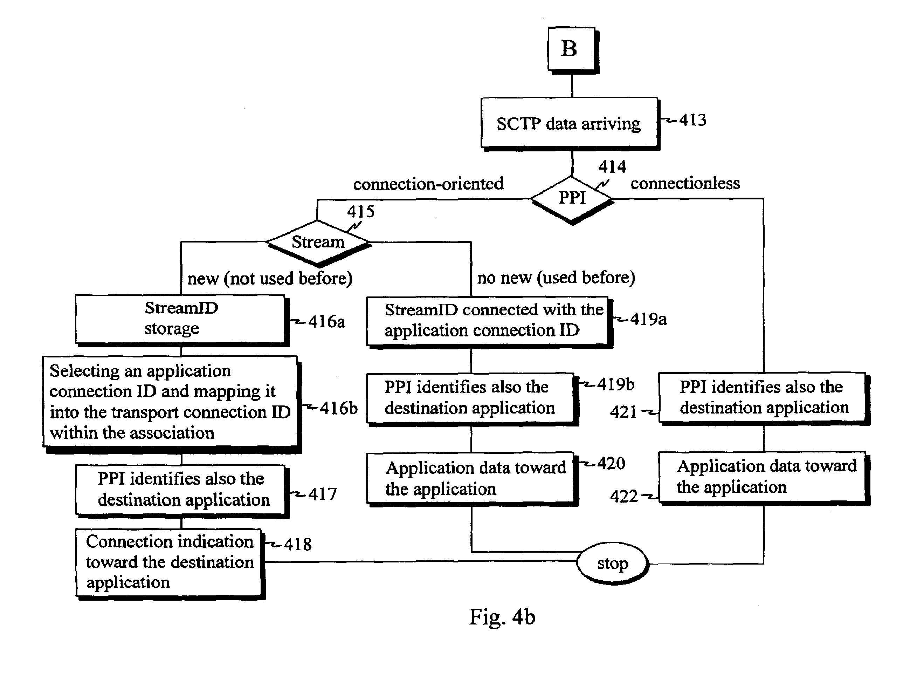

Figure 4b is a flowchart illustrating the mechanism which is based on the use of the PPI parameter to distinguish connection-oriented and connectionless services by the destination endpoint.

In the case of connection-oriented service, the establishment of the signalling connection requested by the source shall be completed before starting the data transfer. The SCTP at the destination endpoint receives an SCTP PDU (413). The SCTP Handler checks the value of the PPI field of the received data packet (414) and determines based on the PPI value that the SCTP PDU relates to connection-oriented service (415). If the streamID within the association was not used before (i.e. the streamID is not currently allocated in the SCTP Handler), the SCTP Handler concludes that the SCTP PDU relates to a signalling connection indication (incoming connection request) (415) and stores the streamID (416a). Then, the SCTP Handler selects an application connection identifier (connID) and maps it into the transport connection identifier (e.g. SCTP streamID) within the association for further routing purposes during length of the connection (416b). The application connection identifier identifies a particular connection within the destination application. The mapping procedure simulates the local establishment of the signalling connection at the destination endpoint side. After that, the SCTP Handler checks the PPI to identify the destination application (417) and sends a connection indication primitive to the destination application indicated by the PPI value (418).

However, if the streamID within the association was used before (i.e. it was already stored in the SCTP Handler), the SCTP Handler concludes that a signalling connection has already been established before for that user and the SCTP PDU payload corresponds to connection-oriented application data. Then, the SCTP Handler uses the streamID to know the destination application connection identifier (connID)(419a). The application connection identifier identifies a particular connection within the destination application. The SCTP Handler checks the PPI to identify the destination application (419b) and sends the SCTP PDU payload (user data) to the identified destination application (420).

Another alternative is that the PPI field indicates that the data relates to connectionless service (414). In this case, the SCTP Handler uses the PPI value to identify the destination application (421). Finally, the SCTP Handler sends the SCTP payload (user data) to the identified destination application as connectionless data (422). The implementation of the mechanism represented in Figure 4a and 4b can be done including the connectionless and connection-oriented values for each of the protocols defined in the PPI field. The mechanism does not require any modification in the SCTP RFC neither in application standards.

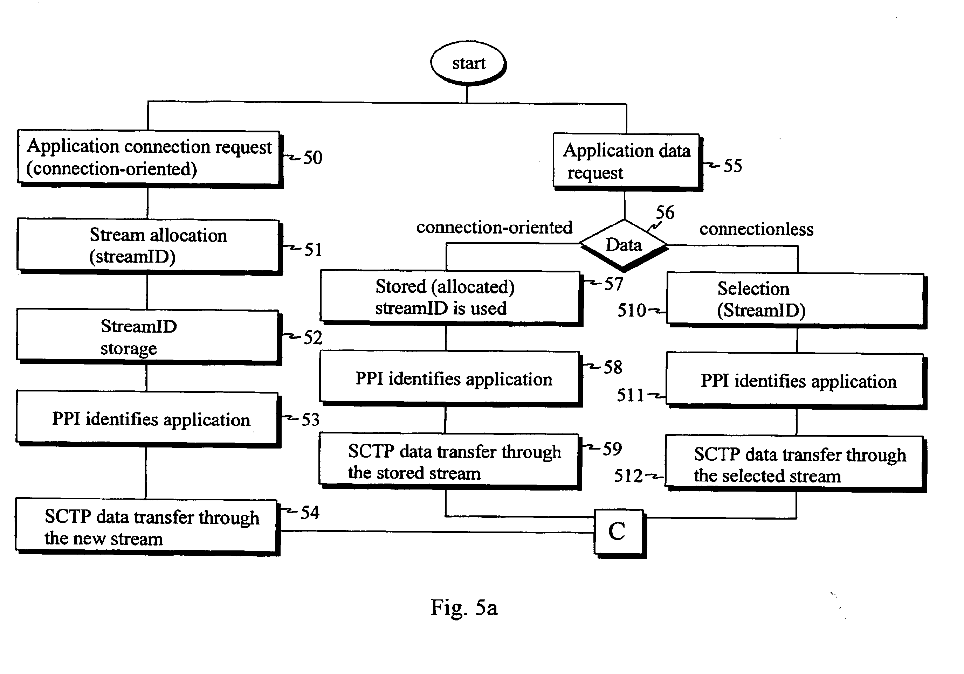

Figure 5a is a flowchart illustrating the mechanism which is based on the reservation of streams to distinguish connection-oriented and connectionless services by the source endpoint. In this case, the SCTP Handler will use a specific stream number (e.g. streamID = 1) or a group of streams to identify connectionless services. The specific reserved value(s) is(are) known in both SCTP endpoints (source and destination). The rest of the streamIDs will be used for connection-oriented services.

In case of connection-oriented service a signalling connection shall be established before starting or in the beginning of the actual data transfer. In the following, the signalling connection establishment is first explained. An application requests a signalling connection establishment by sending a request to the SCTP Handler (50). The SCTP Handler creates an SCTP association between the source and the destination endpoint if it has not been created before. After that, the SCTP Handler selects a stream within the SCTP association (51). The stream is identified by a unique stream number (streamID). It must be noted that the selected streamID cannot be chosen from the stream numbers reserved for connectionless services. The SCTP Handler does the mapping of the streamID within the association and the application connection identifier within the application and stores the mapping information (52). The mapping procedure simulates the local establishment of the signalling connection at the source endpoint side. The mapping is necessary for routing purposes during the length of the connection. Stored information is not released until the signalling connection is released.

The SCTP Handler at the source endpoint selects a suitable value for the Payload Protocol Identifier (PPI) parameter (53). In this example, the PPI value identifies only the destination application. Finally, the SCTP transfers an SCTP PDU to the remote SCTP (54). If application data were present in the application connection request, the data may be transferred as payload within the SCTP PDU.

If the signalling connection for a connection-oriented service has already been set up or the service is connectionless, the functionality is slightly different than when just establishing the signalling connection. When the SCTP Handler at the source endpoint receives application data, the data can be either connection-oriented or connectionless (55). The application data request indicates which service (connection-oriented or connectionless) should be provided by the transport layer. If the SCTP Handler receives connection-oriented data from an upper application that has already established a signalling connection (56), the SCTP Handler will use the previously allocated stream for that signalling connection within the association (57). The SCTP Handler selects the suitable value for the PPI. In this case, the PPI identifies only the destination application (58). Finally, the source SCTP transfers the SCTP PDU to the destination SCTP (59). The application data is transferred as payload within the SCTP PDU.

If the SCTP Handler receives connectionless data from the upper application (56), the SCTP Handler selects one of the streams allocated in the SCTP association for the transport of connectionless signalling (i.e. streamID = 1, or one stream from the group of streams used for connectionless signalling). (510). If an association between the source and destination endpoints has not been created before, it will be created at this point. Next, the SCTP Handler selects the suitable value for the PPI (511). In this case, the PPI identifies only the destination application. Finally, the source SCTP transfers the SCTP PDU to the destination SCTP (512). The application data is transferred as payload within the SCTP PDU.

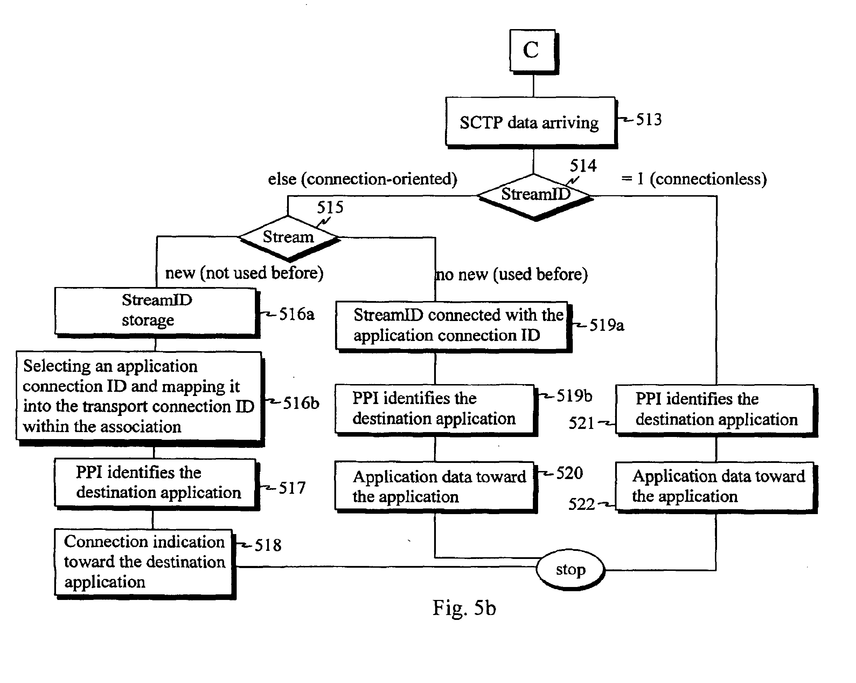

Figure 5b is a flowchart illustrating the mechanism which is based on the reservation of streams to distinguish connection-oriented and connectionless services by the destination endpoint.

In the case of connection-oriented service, the establishment of the signalling connection requested by the source shall be completed before starting the data transfer. The SCTP at the destination endpoint receives an SCTP PDU (513). The SCTP Handler checks the value of the SCTP streamID (514). The streamID determines the type of the received data (connection-oriented or connectionless). If the streamID is not among streamID(s) allocated / reserved to connectionless services, then the streamID refers to connection-oriented service (515). If the streamID within the association was not used before (i.e. the streamID is not currently allocated in the SCTP Handler), the SCTP Handler concludes that the SCTP PDU relates to a signalling connection indication (incoming connection request) and stores and allocates the streamID for that signalling connection (516a). Then, the SCTP Handler selects an application connection identifier and maps it into the transport connection identifier (e.g. SCTP streamID) within the association for further routing purposes during length of the connection (516b). The application connection identifier identifies a particular connection within the destination application. The mapping procedure simulates the local establishment of the signalling connection at the destination endpoint side. After that, the SCTP Handler checks the PPI to identify the destination application (517) and sends a connection indication primitive to the destination application indicated by the PPI value (518).

However, if the streamID within the association was used before (i.e. it is stored in the SCTP Handler), the SCTP Handler concludes that a signalling connection has already been established before for that user and the SCTP PDU payload corresponds to connection-oriented application data. Then, the SCTP Handler uses the streamID to know the application connection identifier (connID) (519a). The application connection identifier identifies a particular connection within the destination application. The SCTP Handler checks the PPI to identify the destination application (519b). After that, the SCTP Handler sends the SCTP PDU payload (user data) to the identified destination application (520).

Another possibility is that the stream number indicates (i.e. streamID = 1) that the data relates to connectionless service (514). In this case, the SCTP Handler uses the PPI value to identify the destination application (521). Finally, the SCTP Handler sends the SCTP payload (user data) to the identified destination application as connectionless data (522). The implementation of the mechanism represented in Figure 5a and 5b can be done by reserving a specific stream for connectionless services. The mechanism does not require any modification in the SCTP RFC neither in application standards.

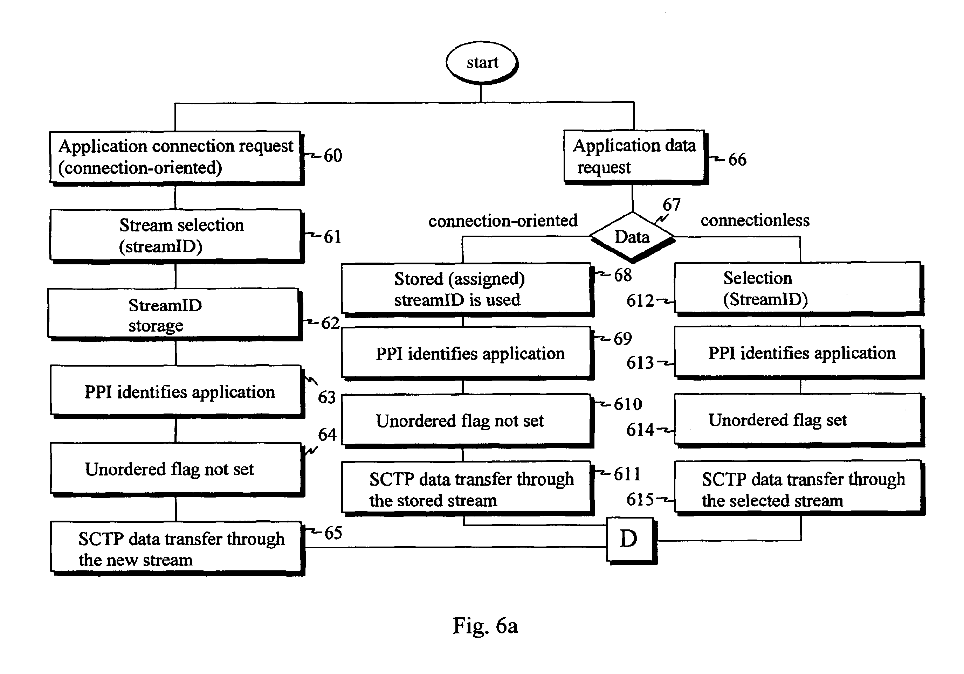

Figure 6a is a flowchart illustrating the mechanism which is based on use of the SCTP unordered-flag parameter to distinguish connection-oriented and connectionless services by the source endpoint. The original purpose of the unordered flag (U bit) in the SCTP is specified in RFC 2960. The unordered bit, if set to '1', indicates that this is an unordered data chunk, and there is no Stream Sequence Number assigned to this DATA chunk. Therefore, the receiver must ignore the Stream Sequence Number field. After reassembly (if necessary), unordered data chunks must be dispatched to the upper layer by the receiver without any attempt to re-order. If an unordered user message is fragmented, each fragment of the message must have its U bit set to '1'.

In case of connection-oriented service a signalling connection shall be established before or in the beginning of starting the actual data transfer. In the following, the signalling connection establishment is first explained. An application requests a signalling connection establishment by sending a request to the SCTP Handler (60). The SCTP Handler creates an SCTP association between the source and the destination endpoint if it has not been created before. After that, the SCTP Handler selects one of the already non-allocated streams within the SCTP association (61). The stream is identified by a unique stream number (streamID). The SCTP Handler does the mapping of the streamID within the association and the application connection identifier within the application and stores the mapping information (62). The mapping procedure simulates the local establishment of the signalling connection at the source endpoint side. The mapping is necessary for routing purposes during the length of the connection. Stored information is not released until the signalling connection is released.

The SCTP Handler at the source endpoint selects a suitable value for the Payload Protocol Identifier (PPI) parameter (63). The PPI value identifies the destination application. However, the service type (connection-oriented or connectionless) is now indicated in a different way than in the previous examples. In this case the SCTP 'unordered flag' parameter is used to distinguish between connection-oriented and connectionless services. The unordered flag is not set with connection-oriented services (64). Finally, the SCTP transfers an SCTP PDU to the remote SCTP (65). If application data were present in the application request, the data may be transferred as payload within the SCTP PDU.

If the signalling connection for a connection-oriented service has already been set up or the service is connectionless, the functionality is slightly different than when just establishing the signalling connection. When the SCTP Handler at the source endpoint receives application data, the data can be either connection-oriented or connectionless (66, 67). The application data request indicates which service (connection-oriented or connectionless) should be provided by the transport layer. If the SCTP Handler receives connection-oriented data from an upper application that has already established a signalling connection, the SCTP Handler will use the previously assigned stream for that signalling connection within the association (68). The SCTP Handler selects the suitable value for the PPI. In this case the PPI identifies only the destination application (69). Again, the SCTP 'unordered flag' parameter is used to discriminate between connection-oriented and connectionless services. The unordered flag is not set with connection-oriented services (610). Finally, the source SCTP transfers the SCTP PDU to the destination SCTP (611). The application data is transferred as payload within the SCTP PDU.

If the SCTP Handler receives connectionless data from the upper application, the SCTP Handler selects any of the SCTP streams within the association (612). If an association between the source and destination endpoints has not been created before, it will be created. Next, the SCTP Handler selects the suitable value for the PPI. In this case the PPI identifies only the destination application (613). In this case the SCTP unordered flag parameter is used to distinguish between connection-oriented and connectionless services. The unordered flag is now set to indicate that this is a connectionless services (614). Finally, the source SCTP transfers the SCTP PDU to the destination SCTP (615). The application data is transferred as payload within the SCTP PDU.

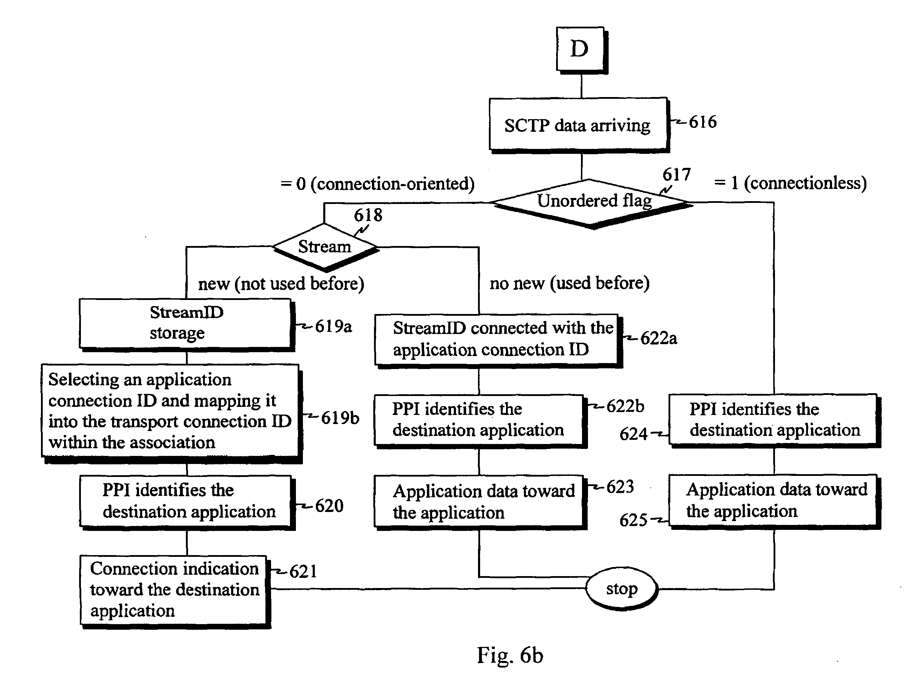

Figure 6b is a flowchart illustrating the mechanism which is based on use of the SCTP unordered-flag parameter to distinguish connection-oriented and connectionless services by the destination endpoint. The support of this mechanism in the receiving endpoint would require changes in the current standard SCTP primitives.

In the case of connection-oriented service, the establishment of the signalling connection requested by the source shall be completed before starting the data transfer. The SCTP at the destination endpoint receives an SCTP PDU (616). The SCTP Handler checks whether the unordered flag is set ('1') or not ('0') (617). If it is not set, the received SCTP data relates to connection-oriented service. If the streamID within the association was not used before (i.e. the streamID is not stored in the SCTP Handler) (618), the SCTP Handler concludes that the SCTP PDU relates to a signalling connection indication (incoming connection request) and stores the streamID (619a). Then, the SCTP Handler selects an application connection identifier (connID) and maps it into the transport connection identifier (e.g. SCTP Stream ID) within the association for further routing purposes during length of the connection (619b). The application connection identifier identifies a particular connection within the destination application. The mapping procedure simulates the local establishment of the signalling connection at the destination endpoint side. After that, the SCTP Handler checks the PPI to identify the destination application (620) and sends a connection indication primitive to the destination application indicated by the PPI value (621).

However, if the streamID within the association was used before (i.e. it is stored in the SCTP Handler), the SCTP Handler concludes that a signalling connection was established before for that user and the SCTP PDU payload corresponds to connection-oriented application data. Then, the SCTP Handler uses the streamID to know the application connection identifier (622a). The application connection identifier identifies a particular connection within the destination application. The SCTP Handler checks the PPI to identify the destination application (622b) and sends the SCTP PDU payload (user data) to the identified destination application (623).

Another alternative is that the unordered flag indicates ('1') that the data relates to a connectionless service (617). In this case, the SCTP Handler uses the PPI value to identify the destination application (624). Finally, the SCTP Handler sends the SCTP payload (user data) to the identified destination application as connectionless data (625).

Yet another alternative is to combine the functionalities illustrated in Figures 5 - 6. In this case, the SCTP Handler will use a specific stream number (e.g. streamID = 1) or a group of streams to identify connectionless services. The selected stream(s) for connectionless messages will use unordered transmission of messages, by setting the unordered flag. The main advantage of this solution from the solution illustrated with Figures 5a and 5b is that in this case the "Head of Line blocking" is avoided: if one packet in the selected stream is lost, the next packets are delivered without waiting for the retransmission of the lost packet.

As a conclusion, the mechanisms presented in this invention mechanisms describe a simplified protocol stack which is able to provide the same kind of services than a signalling protocol like SCCP/M3UA or SUA to the application, this means connection oriented and connectionless services and set up of the signalling connections. This simplified protocol stack has clear benefits: reduction of the overhead introduced by the SCCP/M3UA, SUA or any peer to peer adaptation protocol used; avoidance of the overlapping addressing/routing mechanisms, etc. Solutions do not require changes to the existing specification and peer-to-peer signalling except in the mechanism represented in Figures 6a and 6b.

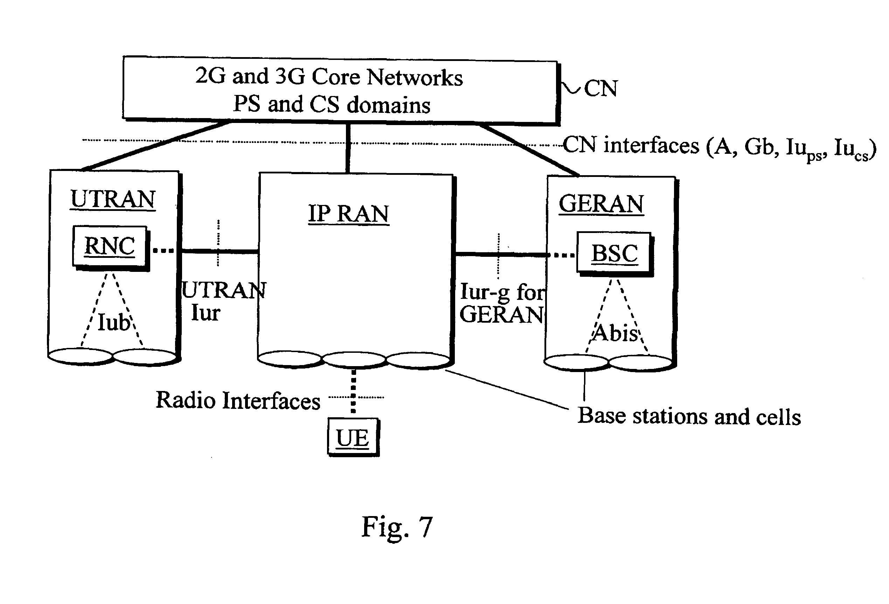

Figure 7 illustrates one embodiment of the system wherein the present invention can be used. The system comprises three radio access networks: the UTRAN, IP-RAN and GERAN. The GERAN (GSM/EDGE radio access network) is an enhanced GSM radio access network. Enhanced here means that the GERAN uses the EDGE as a radio technology. The EDGE allows use of the UMTS services with 800/900/ 1800/1900 MHz frequency bands. The GERAN offers full advantages of GPRS (General Packet Radio System) to be explored. The base station subsystem (BSS) of the GERAN may be connected to the GSM core network by Gb (between the BSS and a GSM SGSN) and A (between a BSS and a GSM MSC) interfaces. The BSS may be further connected to the UMTS network by interfaces Iu-ps (between a BSS and a 3G SGSN) and Iucs (between a BSS and a 3G MSC). The BSS may further be connected to the RNC of the UTRAN or to another BSS by Iur-g interface. The BSS includes a base station controller (BSC) and base transceiver stations (BTS). In the GERAN the air interface between the BTS and user equipment (UE) is called Um.

The IP RAN (Internet Protocol Radio Access Network) is a RAN architecture that is fully optimised to carry IP traffic and is based on IP transport technology. In the IP RAN, some of the functions of the centralised radio network controller (RNC and BSC) are moved to the base station IP BTS. In this configuration the division of functionalities between network elements is fundamentally re-defined to suit the needs of IP traffic. This is clearly different from just using IP as a transport solution with the existing network architectures like the GSM (Global System for Mobile Communications) and the CDMA (Code Division Multiple Access) based radio access networks. The radio access networks are connected to the core network CN. Figure 7 comprises also user equipment UE. The user equipment UE refers preferably to a mobile terminal, e.g. a mobile phone. The user equipment UE may be connected to one or more radio access networks.

It must be noted that Figure 7 illustrates only one embodiment of a system wherein the present invention can be used. Furthermore, the system may comprise elements that are not represented in Figure 7. Elements of this kind may be one or more of the following: the Serving Mobile Location Center (SMLC), Common Resource Manager Server (CRMS), Operation and Maintenance Server (OMS) and transport resource servers.

The present invention can be extended to any interface that includes the SCCP/M3UA/SCTP/IP stack, e.g. the Iur, Iu, A interface. Therefore it is clear that application layer may vary. It can be e.g. the Radio Access Network Application Part (RANAP), Radio Network Subsystem Application Part (RNSAP), Base Station System Application Part (BSSAP) etc. Furthermore, the endpoint described in the present invention may be any of the following: a base station, controller, radio network controller, core network, radio network access server, gateway, server, mobile node, router, wireless router, computer, SGSN, GPRS Gateway Support Node (GGSN), any suitable radio access network or core network element or the like.

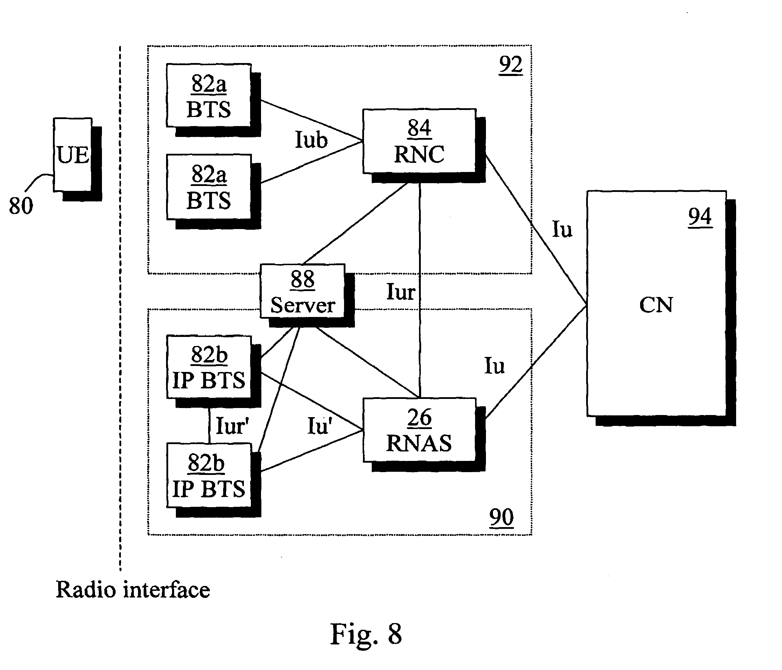

Figure 8 shows an embodiment of the present invention including an example of IP RAN logical structure. IP base transceiver stations 82 are shown. The user equipment 80 is arranged to communicate with the base transceiver station 82 via a wireless connection. The user equipment may be a mobile telephone, computer, personal digital assistant or any other such entity. The base stations may be conventional base stations 82a or may be IP base stations 82b supporting IP transport. The conventional base stations are connected to a controller which is in the illustrated embodiment a RNC 84. The RNC 84 is connected to the base stations 82a via an Iub interface.

The IP base stations 82b are connected to an IP controller which is referred to as a RNAS 86 (radio network access server). This may provide some similar functions to the RNC and may also be referred to as IP based RNC. The RNAS 86 is connected to the base stations via an Iu' interface. The RNC 84 and the RNAS 86 may communicate with each other via an Iur interface. Also one or more servers 88 may be provided which are arranged to be able to communicate with the RNC 84, the RNAS 86 and the IP base stations 82b or only to some of them. Examples of these servers are Serving Mobile Location Center (SMLC), Common Resource Manager Server (CRMS) and Operation and Maintenance Server (OMS).

The IP base stations 82b and the RNAS 86 constitute an IP RAN 90. The base stations 82a and the RNC 84 constitute a more conventional RAN 92. Both the RNC 84 and the RNAS 86 are arranged to communicate with a core network 94 via an Iu interface.

It should be appreciated that Figure 8 is a schematic view of a network. The more conventional RAN 92 may be omitted from embodiments of the present invention. In some embodiments of the present invention, a separate RNC element may be provided between the base station and the RNAS in the IP RAN. The RNAS could be replaced by an IP based RNC. The IP BTS is a base station which supports IP and some functions of the RNC. This is because in an all IP network it is not necessary to have RNCs as such. Also provided, but not shown are user plane gateways for packet switched (RNGW) and circuit switched (CSGW) traffic. These are arranged between the RANs and/or the core network or other networks. Thus the control plane goes through RNAS which looks like a normal RNC towards other network elements in the core network such as a serving GPRS (general packet radio service) support node SGSN or other radio access network elements such as radio network controller or base station controller. The user plane goes then through these user plane gateways RNGW and CSGW. Additional elements may also be incorporated in the shown arrangement in alternative embodiments of the present invention.

In one embodiment of Figure 8, the adaptation layer is omitted in the communicating control stacks of the IP BTS and the RNAS. However it should be appreciated that embodiments of the present invention can be applied elsewhere. The SCTP may be used in the control plane between these other network elements as well or alternatively. Only the protocol on top of the SCTP changes. In embodiments of the present invention, SCTP can be used in different interfaces of IP based RAN. For example, it can be used between two base stations, between a base station and a controller (either RNC or RNAS). Embodiments of the invention can be used also between controllers (RNCs or RNASes). Furthermore embodiments of the invention can be used between different types of server entities such as serving mobile location centres SMLC or common resource manager servers CRMS and IP base stations or RNCs/RNASes. Embodiments of the present invention can be used between an IP BTS and a UTRAN RNC.

It is obvious to a person skilled in the art that with the advancement of technology, the basic idea of the invention may be implemented in various ways. The invention and its embodiments are thus not limited to the examples described above, instead they may vary within the scope of the claims.

## Claims

1. A method for sending connection-oriented or connectionless data between two endpoints in a protocol architecture comprising at least an application layer and a transport layer and one or more applications using the application layer,
**characterised in that** the method comprises the steps of:
sending a source application request message with an application at the first endpoint to the transport layer, indicating with the source application which service should be provided by the transport layer, the service being connection-oriented or connectionless;
allocating within the transport layer a transport connection identifier at the first endpoint;
sending a data frame to the second endpoint, the data frame comprising at least the allocated transport connection identifier, destination application information and data type information;
receiving the data frame at the transport layer at the second endpoint;
determining at the second endpoint whether the data frame relates to a connection-oriented or connectionless service based on the data type information; and
sending an application message to the destination application at the second endpoint based on the destination application information.

2. The method according to claim 1, **characterised in that** the application layer and transport layer are directly connected with each other.

3. The method according to claim 1, **characterised in that** the transport protocol at the transport layer is the SCTP and the transport connection identifier refers to the SCTP streamID.

4. The method according to claim 1, 2 or 3, **characterised in that** when an application requests a signalling connection to be set up, the method further comprises the steps of:
creating an SCTP association between the first and second endpoint;
selecting an unused SCTP stream number within the SCTP association;
connecting the SCTP stream number of the SCTP association with the application connection identifier within the signalling connection request from the application; and
storing at the transport layer the connection between the selected SCTP stream number and the application connection identifier within the application; and
if the connection request included an application message, delivering the application message as payload in an SCTP message.

5. The method according to claim 4, **characterised in that** when the signalling connection has already been set up and an application sends connection-oriented data to the transport layer, the method further comprises the step of:
selecting the SCTP stream number already assigned to the signalling connection within the SCTP association.

6. The method according to claim 5, **characterised in that** when releasing a signalling connection, the method comprises the steps of:
sending an application release message from the application at one endpoint to the application at the other endpoint;
sending an application release complete message from the application to the application of the other endpoint;
releasing the allocated connection identifier at the transport layer at the destination endpoint based on the application release message;
receiving an application release response message at one endpoint from the application at the other endpoint; and
releasing the allocated connection identifier based on the application release complete message at the transport layer at the first endpoint.

7. The method according to claim 4 or 5, **characterised in that** the method further comprises the step of:
selecting a suitable value for the Protocol Payload Identifier parameter, the Protocol Payload Identifier parameter identifying the destination application and connection-oriented service.

8. The method according to claim 4, **characterised in that** the method further comprises the steps of:
selecting an SCTP stream number specifically used for the connection-oriented service; and
selecting a suitable value for the Protocol Payload Identifier parameter, the Protocol Payload Identifier parameter identifying the destination application.

9. The method according to claim 4 or 5, **characterised in that** the method further comprises the steps of:
selecting a suitable value for the Protocol Payload Identifier parameter, the Protocol Payload Identifier parameter indicating the application protocol used; and
unsetting the SCTP unordered flag parameter, the unsetting of the SCTP unordered flag parameter indicating connection-oriented service.

10. The method according to claim 4, **characterised in that** the method further comprises the steps of:
selecting an SCTP stream number specifically for connection-oriented services;
selecting a suitable value for the Protocol Payload Identifier parameter, the Protocol Payload Identifier parameter identifying the destination application; and
unsetting the SCTP unordered flag parameter, the unsetting of the SCTP unordered flag parameter indicating connection-oriented service.

11. The method according to claim 1, 2 or 3, **characterised in that** when an application sends connectionless data to the transport layer, the method further comprises the steps of:
creating an SCTP association between the first and second endpoint if it has not been created before;
selecting an unused SCTP stream number within the SCTP association; and
selecting a suitable value for the Protocol Payload Identifier parameter, the Protocol Payload Identifier parameter identifying the destination application and the connectionless service.

12. The method according to claim 1, 2 or 3, **characterised in that** when an application sends connectionless data to the transport layer, the method further comprises the steps of:
creating an SCTP association between the first and second endpoint if it has not been created before;
selecting an SCTP stream number specifically reserved for connectionless services; and
selecting a suitable value for the Protocol Payload Identifier parameter, the Protocol Payload Identifier parameter identifying the destination application.

13. The method according to claim 1, 2 or 3, **characterised in that** when an application sends connectionless data to the transport layer, the method further comprises the steps of:
creating an SCTP association between the first and second endpoint if it has not been created before;
selecting any SCTP stream number within the SCTP association;
selecting a suitable value for the Protocol Payload Identifier parameter, the Protocol Payload Identifier parameter indicating the application protocol used; and
setting the SCTP unordered flag parameter to '1', the setting of the SCTP unordered flag parameter indicating connectionless service.

14. The method according to claim 1, 2 or 3, **characterised in that** when an application sends connectionless data to the transport layer, the method further comprises the steps of:
creating an SCTP association between the first and second endpoint if it has not been created before;
selecting an SCTP stream number specifically used for connectionless services;
setting the SCTP unordered flag parameter to '1'; and
selecting a suitable value for the Protocol Payload Identifier parameter, the Protocol Payload Identifier parameter identifying the destination application.

15. The method according to claim 7, **characterised in that** at the second endpoint, the method further comprises the steps of:
determining based on the Protocol Payload Identifier parameter value that the data frame relates to connection-oriented service; and if the SCTP stream number within the data frame was not used before, concluding that the data frame relates to a new signalling connection and storing the SCTP stream number;
selecting an application connection identifier and mapping it into the SCTP stream number;
determining based on the Protocol Payload Identifier parameter value the destination application; and
sending a signalling connection indication and/or the payload of the SCTP message to the destination application.

16. The method according to claim 11,
**characterised in that** at the second endpoint, the method further comprises the steps of:
determining based on the Protocol Payload Identifier parameter value that the data frame relates to connectionless service;
determining based on the Protocol Payload Identifier parameter value the destination application;
sending the payload of the SCTP message to the destination application.

17. The method according to claim 8, **characterised in that** at the second endpoint, the method further comprises the steps of:
determining based on the SCTP stream number that the data frame relates to connection-oriented service; and if the SCTP stream number within the data frame was not used before, concluding that the data frame relates to a new signalling connection and storing the SCTP stream number;
selecting an application connection identifier and mapping it into the SCTP stream number;
determining based on the Protocol Payload Identifier parameter value the destination application; and
sending a signalling connection indication and/or the payload of the SCTP message to the destination application.

18. The method according to claim 12,
**characterised in that** at the second end-point, the method further comprises the steps of:
determining based on the SCTP stream number that the data frame relates to connectionless service;
determining based on the Protocol Payload Identifier parameter value the destination application;
sending the payload of the SCTP message to the destination application.

19. The method according to claim 9, **characterised in that** at the second endpoint, the method further comprises the steps of:
determining based on the SCTP unordered flag that the data frame relates to connection-oriented service; and if the SCTP stream number within the data frame was not used before, concluding that the data frame relates to a new signalling connection and storing the SCTP stream number;
selecting an application connection identifier and mapping it into the SCTP stream number;
determining based on the Protocol Payload Identifier parameter value the destination application; and
sending a signalling connection indication and/or the payload of the SCTP to the destination application.

20. The method according to claim 13, **characterised in that** at the second endpoint, the method further comprises the steps of:
determining based on the SCTP unordered flag that the data frame relates to connectionless service;
determining based on the Protocol Payload Identifier parameter value the destination application;
sending the payload of the SCTP message to the destination application.

21. The method according to claim 14, **characterised in that** at the second endpoint, the method further comprises the steps of:
determining based on the SCTP stream number that the data frame relates to connectionless service;
determining based on the Protocol Payload Identifier parameter value the destination application; and
sending a signalling connection indication and/or the payload of the SCTP message to the destination application.

22. An interconnecting handler program for sending and receiving connection-oriented and connectionless data between two endpoints in a protocol architecture comprising at least an application layer and a transport layer and one or more applications using the application layer,
**characterised in that** the interconnecting handler comprises:
program code for receiving (IF1) a source application request message from an application;
program code means for allocating (ID) a transport connection identifier;
program code for including (IM) at least the allocated transport connection identifier, destination application information and data type information in a data frame to be sent to a second endpoint at the transport layer;
program code for reading (RM) a transport connection identifier, destination application information and data type information from a received data frame;
program code for determining (DM) whether the data frame relates to connection-oriented or connectionless service based on the data type indication;
program code for detecting (DEM) if a received data frame corresponds to a new or an already existing signalling connection;
program code for selecting (SEL) an application connection identifier if the received data frame corresponds to a new signalling connection; and
program code for sending (IF2) an application message to the destination application at the application layer based on the destination application information.

23. The interconnecting handler program according to claim 22, **characterised in that** the interconnecting handler further comprises program code adapted to connect the application layer and transport layer with each other.

24. The interconnecting handler program according to claim 22 or 23, **characterised in that** the transport protocol at the transport layer is the SCTP.

25. The interconnecting handler program according to claim 22, 23 or 24, **characterised in that** the interconnecting handler further comprises:
program code for creating (CM) an SCTP association between endpoints.

26. The interconnecting handler program according to claim 25, **characterised in that**:
program code for selecting (ID) are also provided for selecting an SCTP stream number within the SCTP association based on the fact whether the service in question is connection-oriented or connectionless.

27. The interconnecting handler program according to claim 26, **characterised in that** the interconnecting handler further comprises:
program code for storing (SM) the relation between the selected SCTP stream number and the application connection identifier within the application; and
program code for reading (RM) are also provided for checking stored SCTP stream numbers.

28. The interconnecting handler program according to claim 22, 23, 24, 25, 26 or 27, **characterised in that:**
program code for selecting (ID) are also provided for selecting a suitable value for the Protocol Payload Identifier parameter, the Protocol Payload Identifier parameter identifying the destination application and/or connectionless or connection-oriented service.

29. The interconnecting handler program according to claim 22, 23, 24, 25, 26, 27 or 28, **characterised in that** the interconnecting handler further comprises:
program code for selecting (ID) are also provided for setting or unsetting the SCTP unordered flag parameter, the unsetting of the SCTP unordered flag parameter indicating connection-oriented service and setting connectionless service.

30. The interconnecting handler program according to claim 22, 23, 24, 25, 26, 27, 28 or 29, **characterised in that**:
program code for determining (DM) are also provided for determining whether the data frame relates to connection-oriented or connectionless service based on the Protocol Payload Identifier parameter value.

31. The interconnecting handler program according to claim 22, 23, 24, 25, 26, 27, 28, 29 or 30, **characterised in that**:
program code for determining (DM) are also provided for determining the destination application based on the Protocol Payload Identifier parameter value.

32. The interconnecting handler program according to claim 22, 23, 24, 25, 26, 27, 28, 29, 30 or 31, **characterised in that**:
program code for determining (DM) are also provided for determining whether the data frame relates to connection-oriented or connectionless service based on the SCTP stream number.

33. The interconnecting handler program according to claim 32, **characterised in that**:
program code for detecting (DEM) are also provided for determining whether the SCTP stream number relates to a new signalling connection request or to an existing connection.

34. The interconnecting handler program according to claim 22, 23, 24, 25, 26, 27, 28, 29, 30, 31, 32 or 33, **characterised in that**:
program code for determining (DM) are also provided for determining based on the SCTP unordered flag whether the data frame relates to connection-oriented or connectionless service.

35. A system for sending and receiving connection-oriented and connectionless data between two endpoints in a protocol architecture comprising at least an application layer and a transport layer and one or more applications using the application layer,
**characterised in that** the system comprises an interconnecting handler (IHND) wherein the interconnecting handler (IHND) comprises:
means for receiving (IF1) a source application request message from an application;
means for allocating (ID) a transport connection identifier;
means for including (IM) at least the allocated transport connection identifier, destination application information and data type information in a data frame to be sent to the second endpoint at the transport layer;
means for reading (RM) a transport connection identifier, destination application information and/or data type information from a received data frame;
means for determining (DM) whether a data frame relates to connection-oriented or connectionless service based on the data type indication;
means for detecting (DEM) if a received data frame corresponds to a new or an already existing signalling connection;
means for selecting (SEL) an application connection identifier if the received data frame corresponds to a new signalling connection; and
means for sending (IF2) an application message to the destination application at the application layer based on the destination application information.

36. The system according to claim 35, **characterised in that** the interconnecting handler (IHND) is adapted to connect the application layer and transport layer with each other.

37. The system according to claim 35 or 36, **characterised in that** the transport protocol at the transport layer is the SCTP.

38. The system according to claim 37, **characterised in that** the interconnecting handler (IHND) further comprises:
means for creating (CM) an SCTP association between endpoints.

39. The system according to claim 38, **characterised in that**:
means for selecting (ID) are also provided for selecting an SCTP stream number within the SCTP association based on the fact whether the service in question is connection-oriented or connectionless.

40. The system according to claim 35, 36, 37, 38 or 39, **characterised in that** the interconnecting handler (IHND) further comprises:
means for storing (SM) the relation between the selected SCTP stream number and the connection identifier within the application; and
means for reading (RM) are also provided for checking stored SCTP stream numbers.

41. The system according to claim 35, 36, 37, 38, 39 or 40, **characterised in that**:
means for selecting (ID) are also provided for selecting a suitable value for the Protocol Payload Identifier parameter, the Protocol Payload Identifier parameter identifying the destination application and/or connectionless or connection-oriented service.

42. The system according to claim 35, 36, 37, 38, 39, 40 or 41, **characterised in that**:
means for selecting (ID) are also provided for setting or unsetting the SCTP unordered flag parameter, the unsetting of the SCTP unordered flag parameter indicating connection-oriented service and setting connectionless service.

43. The system according to claim 35, 36, 37, 38, 39, 40, 41 or 42, **characterised in that**:
means for determining (DM) are also provided for determining whether the data frame relates to connection-oriented or connectionless service based on the Protocol Payload Identifier parameter value.

44. The system according to claim 35, 36, 37, 38, 39, 40, 41, 42 or 43, **characterised in that**:
means for determining (DM) are also provided for determining the destination application based on the Protocol Payload Identifier parameter value.

45. The system according to claim 35, 36, 37, 38, 39, 40, 41, 42, 43 or 44, **characterised in that**:
means for determining (DM) are also provided for determining whether the data frame relates to connection-oriented or connectionless service based on a SCTP stream number.

46. The system according to claim 45, **characterised in that:**
means for detecting (DEM) are also provided for determining whether the SCTP stream number relates to a new signalling connection request or to an existing connection.

47. The system according to claim 35, 36, 37, 38, 39, 40, 41, 42, 43, 44, 45 or 46, **characterised in tha**t:
means for determining (DM) are also provided for determining based on the SCTP unordered flag whether the data frame relates to connection-oriented or connectionless service.
